(19) Europäisches Patentamt
European Patent Office
Office européen des brevets

(11) **EP 4 167 417 A1**

(12) **EUROPEAN PATENT APPLICATION**
published in accordance with Art. 153(4) EPC

(43) Date of publication:
**19.04.2023 Bulletin 2023/16**

(21) Application number: **21831506.7**

(22) Date of filing: **21.04.2021**

(51) International Patent Classification (IPC):
***H02J 3/00*** (2006.01)

(52) Cooperative Patent Classification (CPC):
**G06N 3/04; G06N 3/08; G06Q 10/04; G06Q 10/06;
H02J 3/00; H02J 3/32; H02J 7/00; H02J 9/06;
Y02B 70/30; Y04S 20/20**

(86) International application number:
**PCT/CN2021/088668**

(87) International publication number:
**WO 2022/001304 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2020 CN 202010615072**

(71) Applicant: **Huawei Technologies Co., Ltd.
Longgang District,
Shenzhen,
Guangdong 518129 (CN)**

(72) Inventors:
- **JIANG, Weixiang
  Shenzhen, Guangdong 518129 (CN)**
- **CHAI, Feng
  Shenzhen, Guangdong 518129 (CN)**
- **WANG, Shuqian
  Shenzhen, Guangdong 518129 (CN)**
- **LIU, Chun
  Shenzhen, Guangdong 518129 (CN)**

(74) Representative: **Huawei European IPR
Huawei Technologies Duesseldorf GmbH
Riesstraße 25
80992 München (DE)**

(54) **DEVICE POWER SUPPLY METHOD, SYSTEM, AND RELATED DEVICE**

(57) This application provides a method and system for supplying power to a device, and a related device, and relates to the field of energy technologies. The method includes: predicting power load of the device in an electricity price interval, where the electricity price interval is a continuous time period in which electricity prices are the same; selecting a power supply policy for the device based on the power load of the device in the electricity price interval, a quantity of stored electric charges of a power storage device at a first moment, and an electricity price at the first moment; and supplying power to the device based on the selected power supply policy. According to the foregoing method, a manner of supplying power to the device can be selected with reference to an electricity price, which reduces power supply costs of the device.

```
┌─────────────────────────────────────────┐
│ A power storage device controller obtains │ S201
│ power load of a device in an electricity  │
│ price interval through prediction by using │
│ a power prediction model                   │
└─────────────────────────────────────────┘
                    │
                    ▼
┌─────────────────────────────────────────┐
│ The power storage device controller       │ S202
│ obtains a quantity of redundant electric  │
│ charges of a power storage device through │
│ calculation based on the power load of    │
│ the device in the electricity price       │
│ interval, a quantity of stored electric   │
│ charges of the power storage device at a  │
│ first moment, and an electricity price of │
│ an electricity price interval within      │
│ which the first moment falls              │
└─────────────────────────────────────────┘
                    │
                    ▼
┌─────────────────────────────────────────┐
│ The power storage device controller       │ S203
│ selects a power supply policy for the     │
│ device based on the quantity of redundant │
│ electric charges of the power storage     │
│ device obtained through calculation       │
└─────────────────────────────────────────┘
                    │
                    ▼
┌─────────────────────────────────────────┐
│ The power storage device controller       │ S204
│ supplies power to the device based on the │
│ obtained power supply policy              │
└─────────────────────────────────────────┘
```

FIG. 2

## Description

## TECHNICAL FIELD

This application relates to the field of energy technologies, and in particular, to a method and system for supplying power to a device, and a related device.

## BACKGROUND

A power system includes power stations and power grids (such as substations and power transmission and distribution lines with various voltages) that transmit electric energy generated by the power stations. The power system is used to supply power to devices. The power grid transmits electric energy based on requirements of devices. Load of the power grid is usually unbalanced. For example, the load of the power grid is high in the daytime, but the load of the power grid is low at night. A power generation capacity of the power station is usually stable and does not fluctuate greatly. Due to the load imbalance of the power grid, a power demand is low during off-peak hours (that is, when the load of the power grid is low), and a redundant power generation capacity of the power station cannot be used; and the power demand is high during peak hours (that is, when the load of the power grid is high), which exceeds a power supply capability of the power station. The power grid increases an electricity price during the peak hours to drive users to reduce consumed electricity during the peak hours, thereby balancing the load of the power grid. This electricity price mode is called a stepwise power tariff.

However, for a scenario in which there are a large quantity of devices in a data center, a power demand is high, and workloads of the devices in different time periods are different. As a result, a power demand of the entire data center fluctuates accordingly. Currently, supplying power to a device is to directly use electric energy sent by a power station by using a power grid. However, the device needs to keep a power supply state all the time regardless of being in an off-peak hour or a peak hour. As a result, power costs of the device are huge.

Therefore, how to adjust a manner of supplying power to a device and reduce power costs of the device becomes an urgent technical problem to be resolved.

## SUMMARY

This application discloses a method and system for supplying power to a device, and a related device, to select a manner of supplying power to the device based on an electricity price, and reduce power supply costs of the device.

According to a first aspect, this application provides a method for supplying power to a device. The method includes: A power storage device controller predicts power load of the device in an electricity price interval, where the electricity price interval is a continuous time period in which electricity prices are the same. The power storage device controller selects a power supply policy for the device based on the power load of the device in the electricity price interval, a quantity of stored electric charges of a power storage device at a first moment, and an electricity price of an electricity price interval within which the first moment falls. The power storage device controller supplies power to the device based on the selected power supply policy.

Optionally, the power storage device controller may predict only power load of the device in a next electricity price interval adjacent to the current electricity price interval, power load of the device in a next electricity price interval non-adjacent to the current electricity price interval, power load of the device in a plurality of electricity price intervals after the current electricity price interval, or power load of the device in all electricity price intervals after the current electricity price interval.

In the solution provided in this application, the power storage device controller may predict the power load of the device in the electricity price interval, and then select the power supply policy for the device with reference to the quantity of stored electric charges of the power storage device at the first moment and the electricity price of the electricity price interval within which the first moment falls. In this way, power supply costs of the device can be reduced.

In a possible implementation, the power storage device controller calculates a quantity of redundant electric charges of the power storage device based on the power load of the device in the electricity price interval, the quantity of stored electric charges of the power storage device at the first moment, and the electricity price of the electricity price interval within which the first moment falls. The power storage device controller determines a power supply mode for the device based on the quantity of redundant electric charges of the power storage device, where the power supply mode includes any one of selecting a power supply to supply power to the device and selecting the power storage device to supply power to the device.

In the solution provided in this application, the power storage device controller determines the power supply mode for the device by calculating the quantity of redundant electric charges of the power storage device. This can ensure that the manner of supplying power to the device can be selected, and avoid a case in which only the power supply can be selected to supply power to the device.

In another possible implementation, when the quantity of redundant electric charges of the power storage device is less than or equal to a first threshold, the power storage device controller selects the power supply to supply power to the device. When the quantity of redundant electric charges of the power storage device is greater than or equal to a second threshold, the power storage device controller selects the power storage device to supply power to the device.

In the solution provided in this application, the power storage device controller selects the manner of supplying power to the device based on a value relationship between the quantity of redundant electric charges of the power storage device and the first threshold and a value relationship between the quantity of redundant electric charges of the power storage device and the second threshold. This can ensure that the selected manner of supplying power can reduce power supply costs of the device.

In another possible implementation, the power storage device controller calculates a quantity of consumed electric charges of the device in the electricity price interval and a quantity of rechargeable electric charges of the power supply in the electricity price interval based on the power load of the device in the electricity price interval. The power storage device controller obtains a quantity of low-price rechargeable electric charges and a quantity of high-price consumed electric charges through statistics collection based on the quantity of consumed electric charges of the device in the electricity price interval and the quantity of rechargeable electric charges of the power supply in the electricity price interval, where the quantity of low-price rechargeable electric charges is a sum of quantities of rechargeable electric charges of the power supply in an electricity price interval in the electricity price interval of which an electricity price is lower than the electricity price of the electricity price interval within which the first moment falls, and the quantity of high-price consumed electric charges is a sum of quantities of consumed electric charges of the device in an electricity price interval in the electricity price interval of which an electricity price is higher than the electricity price of the electricity price interval within which the first moment falls. The power storage device controller obtains the quantity of redundant electric charges of the power storage device through calculation based on the quantity of stored electric charges of the power storage device at the first moment, the quantity of low-price rechargeable electric charges, and the quantity of high-price consumed electric charges, where the quantity of redundant electric charges of the power storage device is a result of subtracting the quantity of high-price consumed electric charges from a sum of the quantity of stored electric charges of the power storage device at the first moment and the quantity of low-price rechargeable electric charges.

In the solution provided in this application, the power storage device controller obtains the quantity of consumed electric charges of the device in the electricity price interval based on the predicted power load in the interval, and then combines the quantity of rechargeable electric charges of the power supply in the electricity price interval and an initial quantity of stored electric charges of the power storage device to obtain the quantity of redundant electric charges of the power storage device through calculation. In this way, it can be ensured that the power storage device controller can correctly select a power supply policy for the device in a subsequent decision-making process.

In another possible implementation, when the quantity of redundant electric charges of the power storage device is less than or equal to the first threshold, the power storage device controller selects the power supply to supply power to the device and charge the power storage device by the power supply while supplying power to the device, where a charging capacity of the power storage device is an absolute value of the quantity of redundant electric charges. When the quantity of redundant electric charges of the power storage device is greater than or equal to the second threshold, the power storage device controller selects the power storage device to supply power to the device, and when a voltage of the power storage device is less than or equal to a voltage threshold, stops supplying power to the device, and selects the power supply to continue to supply power to the device, where a discharging capacity of the power storage device is the quantity of redundant electric charges.

In the solution provided in this application, the power storage device controller selects a manner of supplying power to the device based on the relationship between the quantity of redundant electric charges of the power storage device and the first threshold and the relationship between the quantity of redundant electric charges of the power storage device and the second threshold, so that the power storage device can flexibly switch between charging and discharging. In this way, power supply costs of the device can be finally reduced.

In another possible implementation, the power storage device controller calculates a charging power based on the quantity of redundant electric charges of the power storage device and duration of the electricity price interval within which the first moment falls. The power storage device controller adjusts a power supply voltage based on the charging power, so that the power supply voltage is higher than the voltage of the power storage device, and the power supply charges the power storage device.

In the solution provided in this application, the power storage device controller calculates the charging power, to adjust the power supply voltage to be higher than the voltage of the power storage device, so as to complete charging of the power storage device. In this way, it can be ensured that a charging process of the power storage device is simple and efficient, and charging efficiency of the power storage device is improved.

In another possible implementation, the power storage device controller calculates a discharging power based on the quantity of redundant electric charges of the power storage device and duration of the electricity price interval within which the first moment falls. The power storage device controller adjusts a power supply voltage based on the discharging power, so that the power supply voltage is lower than the voltage of the power storage device, and the power storage device supplies power to the device.

In the solution provided in this application, the power storage device controller calculates the discharging power, to adjust the power supply voltage to be lower than the voltage of the power storage device, so that the power storage device supplies power to the device. In this way, it can be ensured that a discharge process of the power storage device is simple and efficient, and discharge efficiency of the power storage device is improved.

In another possible implementation, the power storage device controller obtains a current of the power storage device. The power storage device controller determines, based on the obtained current of the power storage device, whether to adjust the charging power or the discharging power. The power storage device controller adjusts a current limiting coefficient of the power supply and/or a current limiting coefficient of the power storage device when determining to adjust the charging power or the discharging power.

In the solution provided in this application, the power storage device controller obtains the current of the power storage device, calculates the charging power or the discharging power of the power storage device, and determines whether the charging power or the discharging power of the power storage device is consistent with the expected charging power or the expected determined discharging power. When inconsistent, the current limiting coefficient of the power supply or the current limiting coefficient of the power storage device is adjusted to increase a value of the current passing through the power storage device or decrease a value of the current passing through the power storage device, so as to ensure that the power storage device can be charged or discharged smoothly as expected.

In another possible implementation, the power storage device controller determines an initial power prediction model, where the initial power prediction model includes a deep learning model. The power storage device controller obtains historical power load data of the device, where the historical power load data includes power load of the device recorded before the first moment. The power storage device controller trains the initial power prediction model by using the historical power load data.

In the solution provided in this application, the power storage device controller trains the initial power prediction model by using the historical power load data of the device as sample data, so that the trained power prediction model has a capability of predicting the power load of the device in the electricity price interval. In this way, accuracy of obtaining the power load of the device in the electricity price interval by the power storage device controller and accuracy of the selected power supply policy for the device can be improved.

According to a second aspect, this application provides a power supply control apparatus. The power supply control apparatus includes: a power prediction module, configured to predict power load of a device in an electricity price interval, where the electricity price interval is a continuous time period in which electricity prices are the same; a processing module, configured to select a power supply policy for the device based on the power load of the device in the electricity price interval, a quantity of stored electric charges of a power storage device at a first moment, and an electricity price of an electricity price interval within which the first moment falls; and a communication module, configured to send a power supply command to a power supply or the power storage device, so that the power supply or the power storage device supplies power to the device.

In a possible implementation, the processing module is further configured to: calculate a quantity of redundant electric charges of the power storage device based on the power load of the device in the electricity price interval, the quantity of stored electric charges of the power storage device at the first moment, and the electricity price of the electricity price interval within which the first moment falls; and select a power supply mode based on the quantity of redundant electric charges of the power storage device, where the power supply mode includes any one of selecting the power supply to supply power to the device and selecting the power storage device to supply power to the device.

In another possible implementation, the processing module is further configured to: when the quantity of redundant electric charges of the power storage device is less than or equal to a first threshold, select the power supply to supply power to the device; and when the quantity of redundant electric charges of the power storage device is greater than or equal to a second threshold, select the power storage device to supply power to the device.

In another possible implementation, the processing module is further configured to: calculate a quantity of consumed electric charges of the device in the electricity price interval and a quantity of rechargeable electric charges of the power supply in the electricity price interval based on the power load of the device in the electricity price interval; obtain a quantity of low-price rechargeable electric charges and a quantity of high-price consumed electric charges through statistics collection based on the quantity of consumed electric charges of the device in the electricity price interval and the quantity of rechargeable electric charges of the power supply in the electricity price interval, where the quantity of low-price rechargeable electric charges is a sum of quantities of rechargeable electric charges of the power supply in an electricity price interval in the electricity price interval of which an electricity price is lower than the electricity price of the electricity price interval within which the first moment falls, and the quantity of high-price consumed electric charges is a sum of quantities of consumed electric charges of the device in an electricity price interval in the electricity price interval of which an electricity price is higher than the electricity price of the electricity price interval within which the first moment falls; and obtain the quantity of redundant electric charges of the power storage device through calculation based on the quantity of stored electric charges of the power storage device at the first moment, the quantity of low-price rechargeable electric charges, and the quantity of high-price consumed electric charges, where the quantity of redundant electric charges of the power storage device is a result of subtracting the quantity of high-price consumed electric charges from a sum of the quantity of stored electric charges of the power storage device at the first moment and the quantity of low-price rechargeable electric charges.

In another possible implementation, the processing module is further configured to: when the quantity of redundant electric charges of the power storage device is less than or equal to a first threshold, select the power supply to supply power to the device and charge the power storage device by the power supply while supplying power to the device, where a charging capacity of the power storage device is an absolute value of the quantity of redundant electric charges; and when the quantity of redundant electric charges of the power storage device is greater than or equal to a second threshold, select the power storage device to supply power to the device, and when a voltage of the power storage device is less than or equal to a voltage threshold, stop supplying power to the device, and select the power supply to continue to supply power to the device, where a discharging capacity of the power storage device is the quantity of redundant electric charges.

In another possible implementation, the processing module is specifically configured to: calculate a charging power based on the quantity of redundant electric charges of the power storage device and duration of the electricity price interval within which the first moment falls; and adjust a power supply voltage based on the charging power, so that the power supply voltage is higher than the voltage of the power storage device, and the power supply charges the power storage device.

In another possible implementation, the processing module is specifically configured to: calculate a discharging power based on the quantity of redundant electric charges of the power storage device and duration of the electricity price interval within which the first moment falls; and adjust a power supply voltage based on the discharging power, so that the power supply voltage is lower than the voltage of the power storage device, and the power storage device supplies power to the device.

In another possible implementation, the processing module is further configured to: obtain a current of the power storage device; determine, based on the obtained current of the power storage device, whether to adjust the charging power or the discharging power; and adjust a current limiting coefficient of the power supply and/or a current limiting coefficient of the power storage device when determining to adjust the charging power or the discharging power.

In another possible implementation, the processing module is further configured to: determine an initial power prediction model, where the initial power prediction model includes a deep learning model; obtain historical power load data of the device, where the historical power load data includes power load of the device recorded before the first moment; and train the initial power prediction model by using the historical power load data.

According to a third aspect, this application provides a computing device. The computing device includes a processor and a memory, the memory is configured to store program code, and the processor executes the program code in the memory to implement operation steps of the method according to any one of the first aspect and the implementations of the first aspect.

According to a fourth aspect, this application provides a system for supplying power to a device, including a power module management apparatus, a power storage device, and a power sourcing equipment control apparatus. The power sourcing equipment control apparatus is configured to predict power load of an electric device in an electricity price interval, where the electricity price interval is a continuous time period in which electricity prices are the same; and select a power supply policy for the electric device based on the power load of the electric device in the electricity price interval, a quantity of stored electric charges of the power storage device at a first moment, and an electricity price of an electricity price interval within which the first moment falls. The power storage device is configured to store electric energy and supply power to the electric device. The power module management apparatus is configured to supply power to the electric device and charge the power storage device.

According to a fifth aspect, this application provides a computer-readable storage medium. The computer-readable storage medium stores a computer program, and when the computer program is executed by a processor, the processor performs operation steps of the method for supplying power to the device according to any one of the first aspect and the implementations of the first aspect.

According to a sixth aspect, this application provides a computer program product. The computer program product includes instructions, and when the computer program product is executed by a computer, the computer is enabled to perform a procedure of the method for supplying power to the device according to any one of the first aspect and the implementations of the first aspect.

In this application, on the basis of the implementations according to the foregoing aspects, the implementations may be further combined to provide more implementations.

**BRIEF DESCRIPTION OF DRAWINGS**

FIG. 1 is a diagram of a system architecture of a system for supplying power to a device according to an embodiment of this application;

FIG. 2 is a schematic flowchart of a method for supplying power to a device according to an embodiment of this application;

FIG. 3 is a schematic diagram of a structure of a back-propagation neural network according to an embodiment of this application;

FIG. 4 is a schematic diagram of determining a power supply mode of a device according to an embodiment of this application;

FIG. 5 is a schematic diagram of a structure of a power supply control apparatus according to an embodiment of this application; and

FIG. 6 is a schematic diagram of a structure of a computing device according to an embodiment of this application.

**DESCRIPTION OF EMBODIMENTS**

The following describes the technical solutions in embodiments of this application with reference to the accompanying drawings.

Some terms and related technologies in this application are first described, to facilitate understanding by a person skilled in the art.

A quantity of electric charges (quantity of electric charges) indicates a quantity of electric charges carried by an object, generally with a symbol of Q and a unit of Coulomb (C). The quantity of electric charges may also refer to a quantity of electric energy required by an electric device, and in this case, it is also referred to as electric energy or electric power.

Electric energy (electric energy) refers to a capability of using electricity to work in various forms (that is, generate energy). The unit of the electric energy is kWh (kW*h).

A free charge in a conductor moves regularly in a direction under an action of an electric field force to form a current. A quantity of electric charges passing through any cross section of the conductor in a unit time is called current intensity, which is called current for short. The symbol is I and the unit is ampere (A).

Electric power (electric power) refers to work done by current in a unit time, and is used to indicate a speed of consuming electric energy. The symbol is P, and the unit is watt (W). The formula for calculating the electric power is as follows: $P = W/t$, indicating the electric energy consumed in a unit time.

A large amount of electric energy needs to be consumed to keep a data center running at all times. Because a device in the data center, for example, a computing device, a network device, or a storage device, needs to keep a power supply state at all times to ensure that a service can be normally provided externally, large electricity costs are generated during peak hours. To reduce an electric energy requirement of the data center for a power grid during the peak hours and reduce electricity costs of the data center, this application provides a method for supplying power to a device, to change a manner of supplying power to the device, reduce the electric energy requirement of the device for the power grid during the peak hours, and effectively reduce power supply costs of the device.

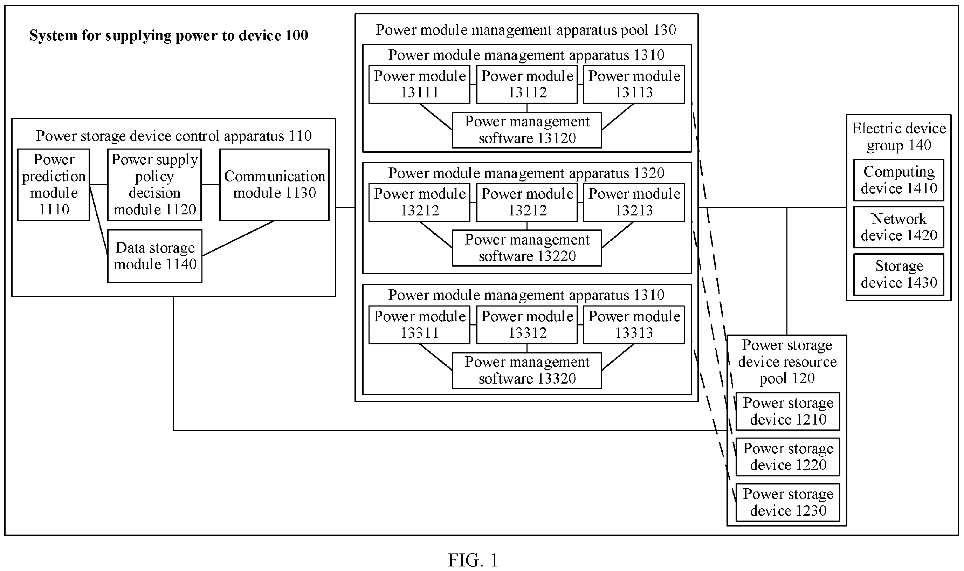

FIG. 1 is a diagram of a system architecture of a system for supplying power to a device according to this application. A power system is connected to the system for supplying power to the device, and supplies power to the device by using a power module management apparatus pool in the system for supplying power to the device. A power module management apparatus may also be referred to as a power supply, and the power module management apparatus pool may also be referred to as a power supply pool. The system for supplying power to the device includes a power storage device control apparatus 110, a power storage device resource pool 120, a power module management apparatus pool 130, and an electric device group 140. The power storage device control apparatus 110 may be a chip that has a computing capability and a communication capability (for example, a field-programmable gate array (field-programmable gate array, FPGA) chip) or a server node. A power prediction module 1110, a power supply policy decision module 1120, a communication module 1130, and a data storage module 1140 are deployed in the power storage device control apparatus 110. These modules are connected to each other by using an internal bus, collaborate with each other, and externally implement a control function. There is one or more power storage devices in the power storage device resource pool 120, for example, a power storage device 1210, a power storage device 1220, and a power storage device 1230. Each power storage device may be a lithium battery energy storage cabinet, configured to store electric energy input by the power supply system or supply power to the electric device group 140. The power module management apparatus pool 130 includes one or more power module management apparatuses, for example, a power module management apparatus 1310, a power module management apparatus 1320, and a power module management apparatus 1330. One or more power modules and power management software are deployed in each power module management apparatus. Each power module may include a transformer, a cell, and a related circuit, configured to convert electric energy having a standard voltage (for example, 220 volts) input by the power system into electric energy having a voltage (for example, 50 volts) suitable for normal operations of the electric device and the power storage device. The power module may directly supply power to the electric device and charge the power storage device by adjusting a voltage by using the transformer. For example, a power module 13111, a power module 13112, a power module 13113, and power management software 13120 are deployed in the power module management apparatus 1310, and are connected to each other. The power management software 13120 manages and controls the power module 13111, the power module 13112, and the power module 13113. All electric energy in the power module is directly provided by the power supply system, and supplies power to the electric device group 140 or charges the power storage device in the power storage device resource pool 120. Each power module management apparatus in the power module management apparatus pool 130 may be connected to the one or more power storage devices in the power storage device resource pool 120, and then supply power to a device in the electric device group 140. The electric device group may be a device cluster formed by devices in a plurality of data centers, for example, a computing device 1410, a network device 1420, and a storage device 1430. Certainly, each power storage device in the power storage device resource pool 120 may also be connected to the one or more power module management apparatuses in the power module management apparatus pool 130, and then supply power to a device in the electric device group 140. To ensure stable power supply, in this application, preferably, a power storage device in the power storage device resource pool 120 is connected to a power module management apparatus in the power module management apparatus pool 130 in a one-to-one manner, that is, each power storage device is correspondingly connected to one power module management apparatus.

The communication module 1130 in the power storage device control apparatus 110 may be a communication port, be formed by a transceiver or a transceiver-related circuit component, be configured to receive power load data sent by the power management software deployed by the power module management apparatus in the power module management apparatus pool 130 and data related to the power storage device in the power storage device resource pool 120 (for example, a quantity of stored electric charges of the power storage device), and store the data in the data storage module 1140. The data storage module 1140 may be an on-chip random access memory (random access memory, RAM) or a dynamic random access memory (dynamic random access memory, DRAM) in a server. The power prediction module 1110 may be an on-chip arithmetic logic unit (arithmetic logic unit, ALU) or a generic array logic (generic array logic) chip in a server, and is configured to predict a power load curve of a device in the electric device group 140 in a future time period (for example, one day) based on the power load data stored in the data storage module 1140. The power supply mode decision module 1120 may be formed by a processor or a processor-related circuit component, be configured to select a power supply policy for the electric device group 140 based on the power load curve predicted by the power prediction module 1110, an electricity price curve stored in the data storage module 1140, and the quantity of stored electric charges of the power storage device, obtain a charging/discharging capacity and a charging/discharging power of the power storage device through calculation, and finally send the charging/discharging capacity and the charging/discharging power that are obtained through calculation to the power management software in the power module management apparatus by using the communication module 1130, to complete charging and discharging of the power storage device.

It can be seen that, in this application, the device in the electric device group 140 may supply power by using the power module in the power module management apparatus pool 130, or may supply power by using the power storage device in the power storage device resource pool 120, and the power module may charge the power storage device. Therefore, the power storage device control apparatus 110 delivers a charging command to the power module during off-peak hours, so that the power module charges the power storage device when the electricity price is low, and then supplies power to the device in the electric device group 140 during peak hours by using the electric energy stored in the power storage device. This decreases a power demand of the device on the power module during peak hours, reduces power consumption of the power module when the electricity price is high, thereby reducing power supply costs of the device.

It should be noted that, after a basic power facility of the data center is established, a maximum output power is set. The maximum output power is used to ensure a power supply requirement of a device in the data center. However, because a quantity or load of devices in a working state is different, generally, the power supply requirement of the device does not exceed the maximum power. In this case, surplus power other than power that meets the power supply requirement of the device may be used to charge the power storage device.

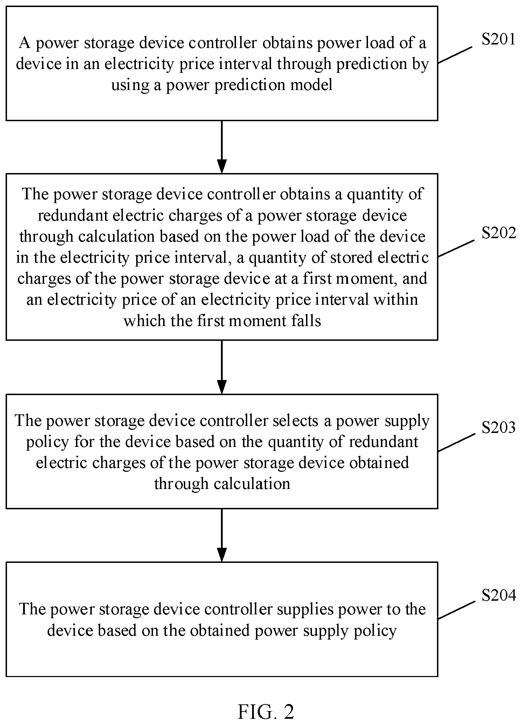

With reference to the system architecture shown in FIG. 1, the following specifically describes a process of supplying power to a device. As shown in FIG. 2, the method includes but is not limited to the following steps.

S201: A power storage device controller obtains power load of the device in an electricity price interval through prediction by using a power prediction model.

Specifically, the power storage device controller may be deployed on any server or computing device that has computing and communication capabilities. The power storage device controller may be the power storage device control apparatus 110 shown in FIG. 1. An electric device in this application may be a computing device, a network device, a storage device, or another device that needs to consume an electric power resource.

It should be understood that an electricity price refers to a price of using electric energy, and may be manually set. The electricity price is not always the same, but stepwise changes. That is, electricity prices corresponding to different time periods are different. For example, from 11:00 p.m. to 7:00 a.m., there are a small number of electricity users, load is light, and the electricity price is low. From 9:00 a.m. to 6:00 p.m., there are a large number of electricity users, load is heavy, and the electricity price is high. The electricity price interval in this application is a continuous time period in which electricity prices are the same, for example, from 11:00 p.m. to 7:00 a.m. described above.

The power storage device controller needs to periodically read the electricity price curve. A reading period of the electricity price curve may be set based on an actual requirement, for example, may be set to one hour. The power storage device controller obtains, based on the electricity price curve, an electricity price of an electricity price interval within which a current reading moment (namely, a first moment) falls, and then determines whether the electricity price at the current reading moment is the same as an electricity price of an electricity price interval within which a reading moment (a second moment) of a previous period falls, namely, a moment that is one period duration (one hour) earlier than the current reading moment. For example, it is assumed that the reading period is one hour, the power storage device controller reads the electricity price curve at 9:00 a.m., to obtain an electricity price in an electricity price interval within which 9:00 a.m. falls, and then determines whether the electricity price is the same as an electricity price in an electricity price interval within which a reading moment of a previous period (namely, 8:00 a.m.) falls. If electricity prices are the same, it indicates that no electricity price inflection point is generated, that is, the electricity price interval within which the first moment falls and the electricity price interval within which the second moment falls are a same electricity price interval. In this case, the power supply mode for the device does not need to be adjusted. Alternatively, if electricity prices are different, it indicates that an electricity price inflection point is generated, that is, the electricity price interval within which the first moment falls and the electricity price interval within which the second moment falls are different electricity price intervals. In this case, a power supply policy needs to be re-determined, and the power storage device controller needs to be triggered to predict power load of the device in a future electricity price interval by using the power prediction model, and further determine, based on a prediction result, whether the power supply policy of the device needs to be adjusted.

In a possible embodiment, when the power storage device controller performs prediction by using the power prediction model, only power load of the device in a next electricity price interval (for example, a next electricity price interval adjacent to the current electricity price interval, or a next electricity price interval not adjacent to the current electricity price interval) of the electricity price interval within which the current reading moment falls may be predicted, power load of the device in a plurality of electricity price intervals after the electricity price interval within which the current reading moment falls may be predicted, or power load of the device in all electricity price intervals after the electricity price interval within which the current reading moment falls may be predicted. This is not limited in this application. For ease of description, this application is described by using an example in which the power storage device controller predicts power load in all electricity price intervals at a time.

Further, before performing prediction, the power storage device controller needs to sample historical power load (for example, power load in a latest week) of the device. A sampling periodicity of the historical power load may be set based on an actual requirement. For example, the sampling periodicity may be set to 10 seconds, that is, the power load of the device is collected every 10 seconds, and collected data is stored. After collecting sufficient historical power load data, the power storage device controller may obtain power load of the device in each future electricity price interval through prediction based on the collected historical power load data. Optionally, the power storage device controller may also divide different time periods based on electricity price intervals, and separately sample power load of each time period.

Optionally, the power storage device controller may predict the power load of the device by using a preset algorithm. The preset algorithm is used to analyze the used data based on a time sequence, to obtain a result that meets a specific characteristic. The preset algorithm includes an extreme gradient boosting (extreme gradient boosting, XGBoost) algorithm, a random forest algorithm, a neural network algorithm, or another algorithm that performs prediction by using a time sequence to predict the power load of the device.

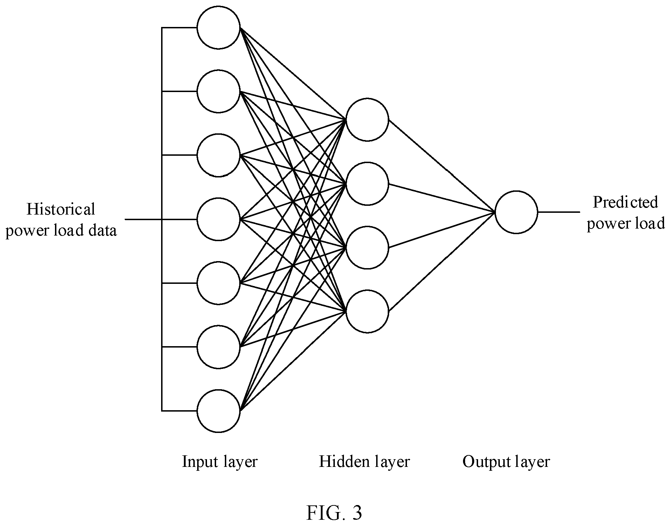

For example, the power storage device controller may predict the power load of the device by using a back-propagation (back-propagation, BP) neural network. The BP network continuously corrects a network weight and a threshold by training sample data, so that an error function decreases in a negative gradient direction to finally be close to an expected output. The following specifically describes a training process of the BP network. FIG. 3 is a diagram of an architecture of the BP network. The BP network includes an input layer, a hidden layer, and an output layer. The hidden layer may have one or more layers. A quantity of neurons at the input layer is 7, a quantity of neurons at the hidden layer is 4, and a quantity of neurons at the output layer is 1. First, an initialization operation is performed on a parameter of the BP network by using an initialization function, or a parameter value is randomly selected to perform an initialization operation on the network. For example, initialization is performed by using a constant of 0.001 or based on Gaussian distribution of 0.001. Then, excitation functions, network performance functions, and quantities of iterations of the hidden layer and the output layer are set. For example, an excitation function of the hidden layer may be set to a tansig function, an excitation function of the output layer may be set to a logsig function, the network performance functions may be set to a traingdx function, and the quantities of iterations may be set to 5000.

Then, the collected historical power load data is normalized as the sample data, and then input to the input layer. After processing, the input layer transmits the processed data to the hidden layer. The hidden layer performs further processing (convolution calculation) on the processed data, and transmits a processing result to the output layer. The output layer updates and adjusts a parameter in the network by using a back-propagation algorithm based on a loss function as a target function. The foregoing processes are iteratively performed until a value of the loss function converges. In this case, BP network training is completed, and the BP network has a capability of predicting power load of the device. The power storage device controller may predict, by using the trained BP network, power load of the device in each future electricity price interval. In a training process, an S-shaped transfer function may be selected for the network transfer function, for example $f(x) = \frac{1}{1+e^{-x}}$, and the error function is $E = \frac{\sum_i (T_i + O_i)^2}{2}$, where $T_i$ is an expected output, and $O_i$ is a calculation output of the network. Based on the error function, the error function E is minimized by continuously adjusting a network weight and a threshold, and training is finally completed.

It should be noted that the power storage device controller may simultaneously predict future power load of the device by using a plurality of prediction algorithms, for example, simultaneously perform prediction by using the XGBoost algorithm, the random forest algorithm, and the neural network algorithm, then compare prediction results of the algorithms, and finally select a most accurate and realistic prediction algorithm. A prediction result of this algorithm is used as a final output result.

S202: The power storage device controller obtains a quantity of redundant electric charges of the power storage device through calculation based on the power load of the device in the electricity price interval, the quantity of stored electric charges of the power storage device at the first moment, and the electricity price of the electricity price interval within which the first moment falls.

Specifically, after obtaining the power load of the device in the electricity price interval based on step S201, the power storage device controller may obtain a quantity of consumed electric charges of the device in the electricity price interval through calculation. It should be understood that a quantity of consumed electric charges of the device in an electricity price interval is an integral of power load of the device in the electricity price interval in a time period corresponding to the electricity price interval. For example, if the electricity price interval is from 7:00 a.m. to 8:00 a.m., and the power load of the device in the time period is 10 kilowatts (kW), the quantity of consumed electric charges of the device in the electricity price interval is 10 kilowatt hours (kW*h).

The power storage device controller further calculates a quantity of rechargeable electric charges of a power module in the electricity price interval, namely, a quantity of electric charges provided by surplus power of the power module in addition to power that meets a power supply requirement of the device when a maximum output power is set. The power module may be a power module in the power module management apparatus pool 130 shown in FIG. 1. Because a physical upper limit exists in a power facility itself, that is, a maximum output power is set for the power facility, in a case where the power load of the device in the electricity price interval is known, the quantity of rechargeable electric charges of the power module in the electricity price interval can be calculated. For example, if the maximum output power of the power facility is 15 kW, and the power load of the device in the electricity price interval from 7:00 a.m. to 8:00 a.m. is 10 kW, it may be calculated that the quantity of rechargeable electric charges of the power module in the electricity price interval is 5 kWh. That is, in the electricity price interval, except for supplying power to the device, the quantity of rechargeable electric charges of the power module is 5 kWh.

After calculating the quantity of consumed electric charges of the device in the electricity price interval and the quantity of rechargeable electric charges of the power supply in the electricity price interval, the power storage device controller obtains a quantity of low-price rechargeable electric charges and a quantity of high-price consumed electric charges through statistics collection. The quantity of low-price rechargeable electric charges is a sum of quantities of rechargeable electric charges of the power module in all electricity price intervals of which an electricity price is lower than the electricity price of the electricity price interval within which the current reading moment (the first moment) falls. The quantity of high-price consumed electric charges is a sum of quantities of consumed electric charges of the device in all electricity price intervals of which an electricity price is higher than the electricity price of the electricity price interval within which the current reading moment falls. After obtaining the quantity of low-price rechargeable electric charges and the quantity of high-price consumed electric charges through statistics collection, the power storage device controller may obtain the quantity of redundant electric charges of the power storage device through calculation. The quantity of redundant electric charges of the power storage device is a result of subtracting the quantity of high-price consumed electric charges from a sum of the quantity of stored electric charges of the power storage device at the current reading moment and the quantity of low-price rechargeable electric charges.

S203: The power storage device controller selects a power supply policy for the device based on the quantity of redundant electric charges of the power storage device obtained through calculation.

Specifically, the power storage device controller decides on a charging and discharging status of the power storage device based on a result of the quantity of redundant electric charges of the power storage device obtained through calculation, and further determines the power supply policy for the device. When the quantity of redundant electric charges of the power storage device obtained through calculation is less than a first threshold, the power module is selected to supply power to the device and charge the power storage device by the power module while supplying power to the device. A charging capacity of the power storage device is an absolute value of the quantity of redundant electric charges. When the quantity of redundant electric charges of the power storage device obtained through calculation is greater than or equal to a second threshold, the power storage device is selected to supply power to the device. A discharging capacity of the power storage device is the quantity of redundant electric charges.

Optionally, the first threshold and the second threshold may be set to a same value, for example, both are set to 0, or may be set to different values. For example, the first threshold is set to 0.1, and the second threshold is set to 0.5.

It should be noted that, because the quantity of redundant electric charges of the power storage device is a result of subtracting the quantity of high-price consumed electric charges from the sum of the quantity of stored electric charges of the power storage device at the current moment and the quantity of low-price rechargeable electric charges of the power storage device. An example in which both the first threshold and the second threshold are set to 0 is used for description. If the quantity of redundant electric charges is less than 0, it indicates that in an electricity price interval after the electricity price interval within which the current moment falls, a sum of the quantity of low-price rechargeable electric charges of the power module and the quantity of stored electric charges in the power storage device at the current moment still cannot meet the quantity of high-price consumed electric charges of the device. Therefore, the power storage device controller selects the power module to supply power to the device and charge the power storage device while supplying power, so that the power storage device stores, in the electricity price interval within which the current moment falls, electric energy charged by the power module. In this way, the stored electric energy is provided for the device for use in a subsequent electricity price interval with a high electricity price, and the quantity of high-price consumed electric charges of the device is reduced. The charging capacity of the power storage device is an absolute value of the quantity of redundant electric charges. Similarly, if the quantity of redundant electric charges is greater than 0, it indicates that in the electricity price interval after the electricity price interval within which the current moment falls, the sum of the quantity of low-price rechargeable electric charges of the power module and the quantity of stored electric charges in the power storage device at the current moment already exceeds the quantity of high-price consumed electric charges of the device. Therefore, the power storage device controller selects the power storage device to supply power to the device, so that the power storage device releases, within the electricity price interval within which the current moment falls, the stored electric energy for use by the device, thereby reducing electric energy of the power module used by the device within the electricity price interval within which the current moment falls. The discharging capacity of the power storage device is the quantity of redundant electric charges.

It should be noted that a capability of storing the electric energy by the power storage device is limited. When the power storage device controller selects the power storage device to supply power to the device, the electric energy stored in the power storage device is continuously consumed. As a result, a voltage of the power storage device continuously decreases. When the electric energy stored in the power storage device is exhausted, that is, when the voltage of the power storage device is less than or equal to a voltage threshold, the power storage device stops supplying power to the device. In this case, to ensure that the device is not powered off, the power module needs to be used to continue to supply power to the device. It should be understood that the voltage of the power storage device is related to the quantity of stored electric charges in the power storage device. When the quantity of stored electric charges in the power storage device reaches a maximum value, the voltage of the power storage device also reaches a maximum value, which is generally 52 volts. When the electric energy stored in the power storage device is exhausted, the voltage of the power storage device reaches a minimum value, which is generally 48 volts. In this state, the power storage device does not continue to discharge. Otherwise, the power storage device may be damaged.

In a possible implementation, the power storage device controller calculates a charging power based on the quantity of redundant electric charges of the power storage device and duration of the electricity price interval within which the current reading moment falls; and adjusts a power supply voltage based on the charging power obtained through calculation, so that the power supply voltage is higher than the voltage of the power storage device, and charges the power storage device.

Specifically, the power storage device controller divides the absolute value of the quantity of redundant electric charges of the power storage device obtained through calculation by the duration of the electricity price interval within which the current reading moment falls, to obtain the charging power, and then adjusts the power supply voltage, so that the power supply voltage is higher than the voltage of the power storage device. This ensures that the power module charges the power storage device while supplying power to the device, so that the power storage device stores electric energy whose current electricity price is low.

In another possible implementation, the power storage device controller calculates a discharging power based on the quantity of redundant electric charges of the power storage device and the duration of the electricity price interval within which the current reading moment falls; and adjusts a power supply voltage based on the discharging power obtained through calculation, so that the power supply voltage is lower than the voltage of the power storage device. This ensures that the power storage device supplies power to the device.

Specifically, the power storage device controller divides the absolute value of the quantity of redundant electric charges of the power storage device obtained through calculation by the duration of the electricity price interval within which the current reading moment falls, to obtain the discharging power, and then adjusts the power supply voltage, so that the power supply voltage is lower than the voltage of the power storage device. This ensures that the power storage device supplies power to the device, and the device does not use the electric energy provided by the power module before the electric energy stored in the power storage device is exhausted.

S204: The power storage device controller supplies power to the device based on the obtained power supply policy.

Specifically, after determining the power supply policy for the device, the power storage device controller sends a corresponding instruction to the power module management apparatus, so that the power module or the power storage device supplies power to the device. For example, when determining to select the power module to supply power to the device, the power storage device controller delivers an instruction for increasing the power supply voltage to the power module management apparatus, so that the power module management apparatus increases the power supply voltage based on the instruction, to ensure that the power supply voltage is higher than the voltage of the power storage device, and the power module supplies power to the device and charges the power storage device at the same time. When determining to select the power storage device to supply power to the device, the power storage device controller delivers an instruction for reducing the power supply voltage to the power module management apparatus, so that the power module management apparatus reduces the power supply voltage based on the instruction, to ensure that the power supply voltage is lower than the voltage of the power storage device, and the power storage device supplies power to the device.

It can be learned that the power storage device controller implements charging and discharging processes of the power storage device by controlling the power supply voltage. The power storage device is completely passive, and does not need to directly receive an instruction sent by the power storage device controller. The power storage device may complete a process of charging or supplying power to the device by making a corresponding conversion based on a change of the power supply voltage.

In a possible implementation, the power storage device controller obtains a current of the power storage device, and determines, based on the obtained current of the power storage device, whether to adjust the charging power or the discharging power.

Specifically, in a process in which the power module supplies power to the device or in a process in which the power storage device supplies power to the device, the power storage device controller may periodically query the current of the current power storage device, or the power storage device periodically reports the current of the power storage device. A query periodicity or a report periodicity may be set based on an actual requirement, for example, may be set to 5 seconds.

After obtaining the current current of the power storage device, the power storage device controller calculates the charging power or the discharging power of the current power storage device based on a charging voltage or a discharging voltage and a power calculation formula, that is, P = I*U, and then, determines whether the power storage device is charged or discharges based on the expected determined charging power or discharging power. If the current charging power or discharging power of the power storage device obtained through calculation deviates from the expectation, the power storage device controller needs to readjust the charging power or discharging power, to ensure that the power storage device can be smoothly charged or discharge as expected.

Optionally, the power storage device controller adjusts a current limiting coefficient of the power module or a current limiting coefficient of the power storage device, to adjust the charging power or discharging power of the power storage device.

Specifically, when the power module charges the power storage device, if the charging power obtained by the power storage device controller through calculation based on the currently obtained current of the power storage device is less than the expected determined charging power (that is, a charging rate of the power storage device is lower than an expected rate), the power storage device controller may adjust the current limiting coefficient of the power supply or the current limiting coefficient of the power storage device, to increase a value of the current passing through the power storage device, thereby increasing the charging power and ensuring that the power storage device can be smoothly charged as expected. Similarly, if the charging power obtained by the power storage device controller through calculation based on the currently obtained current of the power storage device is greater than the expected determined discharging power (that is, the charging rate of the power storage device is higher than the expected rate), the power storage device controller may also adjust the current limiting coefficient of the power supply or the current limiting coefficient of the power storage device, to reduce the value of the current passing through the power storage device, thereby reducing the charging power and ensuring that the power storage device can be charged smoothly as expected.

Similarly, when the power storage device supplies power to the device, if the discharging power obtained by the power storage device controller through calculation based on the currently obtained current of the power storage device is less than the expected determined discharging power (that is, a discharge rate of the power storage device is lower than an expected rate), the power storage device controller may adjust the current limiting coefficient of the power storage device, to increase a value of the current output by the power storage device, thereby increasing the discharging power and ensuring that the power storage device can discharge smoothly as expected. Similarly, if the discharging power obtained by the power storage device controller through calculation based on the currently obtained current of the power storage device is greater than the expected determined discharging power (that is, the discharge rate of the power storage device is higher than the expected rate), the power storage device controller adjusts the current limiting coefficient of the power storage device, to reduce the value of the current output by the power storage device, thereby reducing the discharging power and ensuring that the power storage device can discharge smoothly as expected.

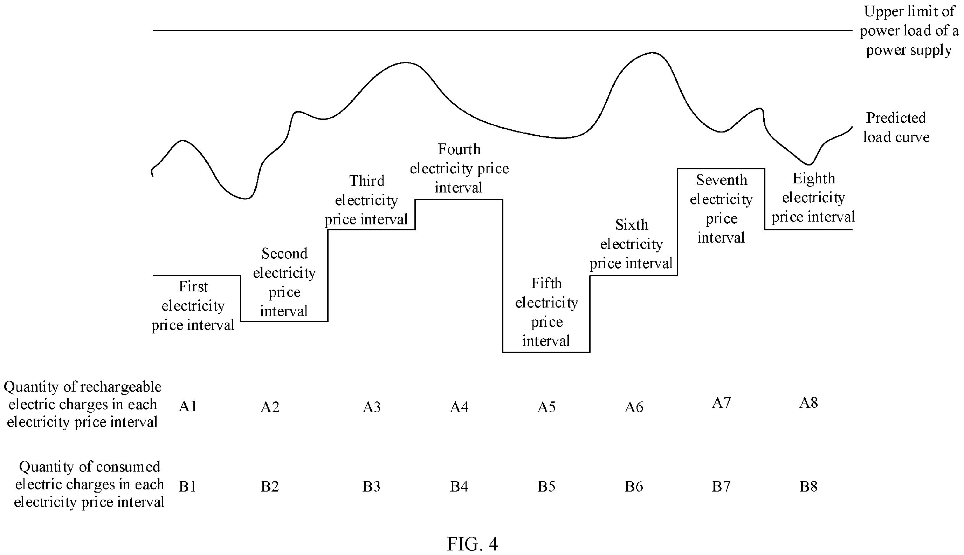

To further describe a process of determining the power supply policy for the device, refer to FIG. 4. As shown in FIG. 4, the electricity price is not always unchanged, but is in a ladder shape. Electricity prices in time periods are different, but an electricity price in a same time period is consistent. The power load of the device keeps changing, as shown by a load curve in FIG. 4. An upper limit of the power load of the power module is fixed, and does not change with time. Based on the predicted power load curve and the upper limit of the power load of the power module, a quantity of rechargeable electric charges and a quantity of consumed electric charges in each time period (namely, each electricity price interval) may be obtained through calculation. For example, a quantity of rechargeable electric charges corresponding to a first electricity price interval is A1, and a quantity of consumed electric charges corresponding to the first electricity price interval is B 1. A quantity of rechargeable electric charges corresponding to a second electricity price interval is A2, and a quantity of consumed electric charges corresponding to the second electricity price interval is B2.

It is assumed that in the first electricity price interval, an electricity price is p1, an initial quantity of stored electric charges of the power storage device at the moment is s 1, and both a quantity of low-price rechargeable electric charges and a quantity of high-price consumed electric charges at the moment are set to 0.

To determine a policy currently used to supply power to the device, the power storage device controller traverses all subsequent electricity price intervals starting from the second electricity price interval. If the second electricity price interval is currently traversed and an electricity price p2 is less than p1, a quantity of low-price rechargeable electric charges L is updated and adjusted to A2, and subsequent electricity price intervals continue to be traversed. If a third electricity price interval is currently traversed, and an electricity price p3 is greater than p1, a quantity of high-price consumed electric charges H is updated and adjusted to B3, and the quantity of redundant electric charges R = s1 + L - H of the power storage device is calculated, that is, a difference between a sum of the initial quantity of stored electric charges and the quantity of low-price rechargeable electric charges (namely, the quantity of rechargeable electric charges in the second electricity price interval) of the power storage device and the quantity of high-price consumed electric charges (namely, a quantity of consumed electric charges in the third electricity price interval) is calculated. If the difference is less than 0, it indicates that a requirement of the quantity of consumed electric charges in the third electricity price interval is not met. In this case, in the first electricity price interval, the power module should be selected to supply power to the device and charge the power storage device at the same time. If the value is greater than 0, it indicates that redundant electric energy exists, and the power storage device should be selected to supply power to the device. After the traversal is completed, for each electricity price interval with an electricity price higher than the current electricity price p1, a corresponding quantity of redundant electric charges R of the power storage device may be obtained through calculation, and a minimum value is selected from all the calculated quantities of redundant electric charges obtained through calculation of the power storage device. If the minimum value is less than 0, the power module is selected to supply power to the device and charge the power storage device at the same time, where a charged capacity is an absolute value of the minimum value. If the minimum value is greater than 0, the power storage device is selected to supply power to the device, so that the power storage device releases a quantity of stored electric charges, where the quantity of released electric charges is the minimum value.

It may be understood that, only an example in which the first electricity price interval is a start electricity price interval is used for description. The start electricity price interval may be any electricity price interval, and a decision-making process thereof is similar to that described above. For brevity, details are not described herein again.

It should be noted that, for ease of description, the foregoing method embodiments are described as a series of action combinations. However, a person skilled in the art should understand that the present invention is not limited by the described action sequence. In addition, a person skilled in the art should also understand that embodiments described in this specification are all preferred embodiments, and the actions mentioned are not necessarily required for the present invention. Another appropriate step combination that a person skilled in the art can think of based on the content described above also falls within the protection scope of the present invention.

The methods in embodiments of this application are described in detail above. For ease of better implementing the solutions in embodiments of this application, correspondingly related devices used to cooperate in implementing the solutions are further provided below.

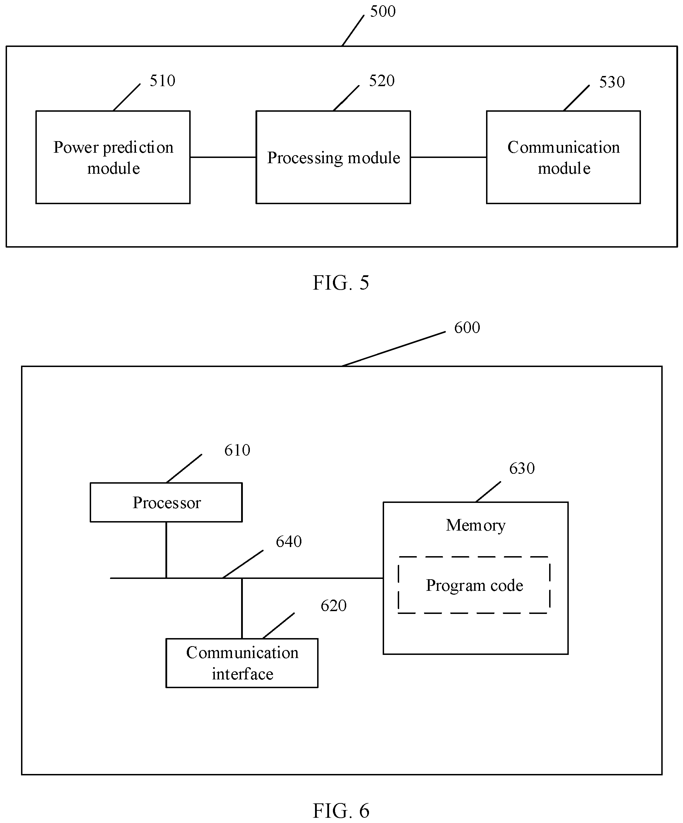

FIG. 5 is a schematic diagram of a structure of a power supply control apparatus according to an embodiment of this application. The power supply control apparatus may be the power storage device controller in the method embodiment shown in FIG. 2. The method and steps in the embodiment of the method for supplying power to the device in FIG. 2 may be performed by using the power storage device controller as an execution body. As shown in FIG. 5, the power supply control apparatus 500 includes a power prediction module 510, a processing module 520, and a communication module 530.

The power prediction module 510 is configured to predict power load of a device in an electricity price interval, where the electricity price interval is a continuous time period in which electricity prices are the same.

The processing module 520 is configured to select a power supply policy for the device based on the power load of the device in the electricity price interval, a quantity of stored electric charges of a power storage device at a first moment, and an electricity price of an electricity price interval within which the first moment falls.

The communication module 530 is configured to send a power supply command to a power supply or the power storage device, so that the power supply or the power storage device supplies power to the device.

Specifically, the power prediction module 510 is configured to perform step S201, and optionally perform an optional method in step S201. The processing module 520 is configured to perform step S202 and step S203, and optionally perform an optional method in step S202 and step S203. The communication module 530 is configured to perform step S204, and optionally perform an optional method in step S204. The three modules may communicate data to each other through a communication channel. It should be understood that the modules included in the power supply control apparatus 500 may be software modules, or may be hardware modules, or some of the modules are software modules and some of the modules are hardware modules.

It should be understood that the power prediction module 510 and the processing module 520 in this embodiment of this application may be implemented by a processor or a processor-related circuit component, and the communication module may be implemented by a transceiver or a transceiver-related circuit component.

It should be noted that the structure of the power supply control apparatus is merely used as an example, and should not constitute a specific limitation. The modules in the power supply control apparatus may be added, removed, or combined as required. In addition, operations and/or functions of the modules in the power supply control apparatus are intended to implement corresponding procedures of the method described in FIG. 2. For brevity, details are not described herein again.

FIG. 6 is a schematic diagram of a structure of a computing device according to an embodiment of this application. As shown in FIG. 6, the computing device 600 includes a processor 610, a communication interface 620, and a memory 630. The processor 610, the communication interface 620, and the memory 630 are connected to each other through an internal bus 640. It should be understood that the computing device 600 may be a server.

The computing device 600 may be the power storage device control apparatus in FIG. 1, and a function performed by the power storage device control apparatus in FIG. 1 is actually performed by the processor 610 of the computing device.

The processor 610 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (FPGA), a generic array logic (generic array logic, GAL), or any combination thereof.

The bus 640 may be a peripheral component interconnect (peripheral component interconnect, PCI) bus, an extended industry standard architecture (extended industry standard architecture, EISA) bus, or the like. The bus 640 may be classified into an address bus, a data bus, a control bus, and the like. For ease of representation, only one thick line is used to represent the bus in FIG. 6, but this does not indicate that there is only one bus or only one type of bus.

The memory 630 may include a volatile memory (volatile memory) such as a random access memory (random access memory, RAM); or the memory 630 may include a non-volatile memory (non-volatile memory) such as a read-only memory (read-only memory, ROM), a flash memory (flash memory), a hard disk drive (hard disk drive, HDD), or a solid-state drive (solid-state drive, SSD); or the memory 630 may include a combination of the foregoing types.

It should be noted that the computing device 600 may correspond to the power storage device controller in the foregoing method embodiments. The memory 630 stores program code corresponding to each module of the power supply control apparatus 500. The processor 610 executes the program code to implement functions of each module of the power supply control apparatus 500. That is, the method in S201 to S204 is performed.

This application further provides a computer-readable storage medium. The computer-readable storage medium stores a computer program. When the computer program is executed by a processor, some or all of the steps recorded in any one of the foregoing method embodiments may be implemented.

An embodiment of the present invention further provides a computer program, and the computer program includes instructions. When the computer program is executed by a computer, the computer is enabled to perform some or all steps of any method for provisioning a region resource.

All or some of the foregoing embodiments may be implemented using software, hardware, firmware, or any combination thereof. When the software is used to implement embodiments, all or some of the foregoing embodiments may be implemented in a form of a computer program product. The computer program product includes one or more computer instructions. When the computer program instructions are loaded or executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (SSD).

The foregoing descriptions are merely specific implementations of this application. Any variation or replacement readily figured out by a person skilled in the art based on the specific implementations provided in this application shall fall within the protection scope of this application.

**Claims**

1. A method for supplying power to a device, wherein the method comprises:

   predicting power load of the device in an electricity price interval, wherein the electricity price interval is a continuous time period in which electricity prices are the same;
   selecting a power supply policy for the device based on the power load of the device in the electricity price interval, a quantity of stored electric charges of a power storage device at a first moment, and an electricity price of an electricity price interval within which the first moment falls; and
   supplying power to the device based on the selected power supply policy.

2. The method according to claim 1, wherein the selecting a power supply policy for the device based on the power load of the device in the electricity price interval, a quantity of stored electric charges of a power storage device at a first moment, and an electricity price of the electricity price interval within which the first moment falls comprises:

   calculating a quantity of redundant electric charges of the power storage device based on the power load of the device in the electricity price interval, the quantity of stored electric charges of the power storage device at the first moment, and the electricity price of the electricity price interval within which the first moment falls; and
   determining a power supply mode for the device based on the quantity of redundant electric charges of the power storage device, wherein the power supply mode comprises any one of selecting a power supply to supply power to the device and selecting the power storage device to supply power to the device.

3. The method according to claim 2, wherein the determining a power supply mode for the device based on the quantity of redundant electric charges of the power storage device comprises:

   when the quantity of redundant electric charges of the power storage device is less than or equal to a first threshold, selecting the power supply to supply power to the device; and
   when the quantity of redundant electric charges of the power storage device is greater than or equal to a second threshold, selecting the power storage device to supply power to the device.

4. The method according to claim 2, wherein the calculating a quantity of redundant electric charges of the power storage device based on the power load of the device in the electricity price interval, the quantity of stored electric charges of the power storage device at the first moment, and the electricity price of the electricity price interval within which the first moment falls comprises:

calculating a quantity of consumed electric charges of the device in the electricity price interval and a quantity of rechargeable electric charges of the power supply in the electricity price interval based on the power load of the device in the electricity price interval;

obtaining a quantity of low-price rechargeable electric charges and a quantity of high-price consumed electric charges through statistics collection based on the quantity of consumed electric charges of the device in the electricity price interval and the quantity of rechargeable electric charges of the power supply in the electricity price interval, wherein the quantity of low-price rechargeable electric charges is a sum of quantities of rechargeable electric charges of the power supply in an electricity price interval in the electricity price interval of which an electricity price is lower than the electricity price of the electricity price interval within which the first moment falls, and the quantity of high-price consumed electric charges is a sum of quantities of consumed electric charges of the device in an electricity price interval in the electricity price interval of which an electricity price is higher than the electricity price of the electricity price interval within which the first moment falls; and

obtaining the quantity of redundant electric charges of the power storage device through calculation based on the quantity of stored electric charges of the power storage device at the first moment, the quantity of low-price rechargeable electric charges, and the quantity of high-price consumed electric charges, wherein the quantity of redundant electric charges of the power storage device is a result of subtracting the quantity of high-price consumed electric charges from a sum of the quantity of stored electric charges of the power storage device at the first moment and the quantity of low-price rechargeable electric charges.

5.  The method according to claim 3 or 4, wherein the method further comprises:

when the quantity of redundant electric charges of the power storage device is less than or equal to the first threshold, selecting the power supply to supply power to the device and charge the power storage device by the power supply while supplying power to the device, wherein a charging capacity of the power storage device is an absolute value of the quantity of redundant electric charges; and

when the quantity of redundant electric charges of the power storage device is greater than or equal to the second threshold, selecting the power storage device to supply power to the device, and when a voltage of the power storage device is less than or equal to a voltage threshold, stopping supplying power to the device, and selecting the power supply to continue to supply power to the device, wherein a discharging capacity of the power storage device is the quantity of redundant electric charges.

6.  The method according to claim 5, wherein charging the power storage device by the power supply comprises:

calculating a charging power based on the quantity of redundant electric charges of the power storage device and duration of the electricity price interval within which the first moment falls; and

adjusting a power supply voltage based on the charging power, so that the power supply voltage is higher than the voltage of the power storage device, and the power supply charges the power storage device.

7.  The method according to claim 5, wherein supplying power to the device by the power storage device comprises:

calculating a discharging power based on the quantity of redundant electric charges of the power storage device and duration of the electricity price interval within which the first moment falls; and

adjusting a power supply voltage based on the discharging power, so that the power supply voltage is lower than the voltage of the power storage device, and the power storage device supplies power to the device.

8.  The method according to claim 6 or 7, wherein the method further comprises:

obtaining a current of the power storage device;

determining, based on the obtained current of the power storage device, whether to adjust the charging power or the discharging power; and

adjusting a current limiting coefficient of the power supply and/or a current limiting coefficient of the power storage device when determining to adjust the charging power or the discharging power.

9. The method according to any one of claims 1 to 8, wherein before the predicting power load of the device in an electricity price interval, the method further comprises:

determining an initial power prediction model, wherein the initial power prediction model comprises a deep learning model;
obtaining historical power load data of the device, wherein the historical power load data comprises power load of the device recorded before the first moment; and
training the initial power prediction model by using the historical power load data.

10. A power supply control apparatus, comprising:

a power prediction module, configured to predict power load of a device in an electricity price interval, wherein the electricity price interval is a continuous time period in which electricity prices are the same;
a processing module, configured to select a power supply policy for the device based on the power load of the device in the electricity price interval, a quantity of stored electric charges of a power storage device at a first moment, and an electricity price of an electricity price interval within which the first moment falls; and
a communication module, configured to send a power supply command to a power supply or the power storage device, so that the power supply or the power storage device supplies power to the device.

11. The power supply control apparatus according to claim 10, wherein the processing module is further configured to:

calculate a quantity of redundant electric charges of the power storage device based on the power load of the device in the electricity price interval, the quantity of stored electric charges of the power storage device at the first moment, and the electricity price of the electricity price interval within which the first moment falls; and
select a power supply mode based on the quantity of redundant electric charges of the power storage device, wherein the power supply mode comprises any one of selecting the power supply to supply power to the device and selecting the power storage device to supply power to the device.

12. The power supply control apparatus according to claim 11, wherein the processing module is further configured to:

when the quantity of redundant electric charges of the power storage device is less than or equal to a first threshold, select the power supply to supply power to the device; and
when the quantity of redundant electric charges of the power storage device is greater than or equal to a second threshold, select the power storage device to supply power to the device.

13. The power supply control apparatus according to claim 11, wherein the processing module is further configured to:

calculate a quantity of consumed electric charges of the device in the electricity price interval and a quantity of rechargeable electric charges of the power supply in the electricity price interval based on the power load of the device in the electricity price interval;
obtain a quantity of low-price rechargeable electric charges and a quantity of high-price consumed electric charges through statistics collection based on the quantity of consumed electric charges of the device in the electricity price interval and the quantity of rechargeable electric charges of the power supply in the electricity price interval, wherein the quantity of low-price rechargeable electric charges is a sum of quantities of rechargeable electric charges of the power supply in an electricity price interval in the electricity price interval of which an electricity price is lower than the electricity price of the electricity price interval within which the first moment falls, and the quantity of high-price consumed electric charges is a sum of quantities of consumed electric charges of the device in an electricity price interval in the electricity price interval of which an electricity price is higher than the electricity price of the electricity price interval within which the first moment falls; and
obtain the quantity of redundant electric charges of the power storage device through calculation based on the quantity of stored electric charges of the power storage device at the first moment, the quantity of low-price rechargeable electric charges, and the quantity of high-price consumed electric charges, wherein the quantity of redundant electric charges of the power storage device is a result of subtracting the quantity of high-price consumed electric charges from a sum of the quantity of stored electric charges of the power storage device at the first moment and the quantity of low-price rechargeable electric charges.

14. The power supply control apparatus according to claim 11, wherein the processing module is further configured to:

when the quantity of redundant electric charges of the power storage device is less than or equal to a first threshold, select the power supply to supply power to the device and charge the power storage device by the power supply while supplying power to the device, wherein a charging capacity of the power storage device is an absolute value of the quantity of redundant electric charges; and

when the quantity of redundant electric charges of the power storage device is greater than or equal to a second threshold, select the power storage device to supply power to the device, and when a voltage of the power storage device is less than or equal to a voltage threshold, stop supplying power to the device, and select the power supply to continue to supply power to the device, wherein a discharging capacity of the power storage device is the quantity of redundant electric charges.

15. The power supply control apparatus according to claim 14, wherein the processing module is specifically configured to:

calculate a charging power based on the quantity of redundant electric charges of the power storage device and duration of the electricity price interval within which the first moment falls; and

adjust a power supply voltage based on the charging power, so that the power supply voltage is higher than the voltage of the power storage device, and the power supply charges the power storage device.

16. The power supply control apparatus according to claim 14, wherein the processing module is specifically configured to:

calculate a discharging power based on the quantity of redundant electric charges of the power storage device and duration of the electricity price interval within which the first moment falls; and

adjust a power supply voltage based on the discharging power, so that the power supply voltage is lower than the voltage of the power storage device, and the power storage device supplies power to the device.

17. The power supply control apparatus according to claim 15 or 16, wherein the processing module is further configured to:

obtain a current of the power storage device; determine, based on the obtained current of the power storage device, whether to adjust the charging power or the discharging power; and adjust a current limiting coefficient of the power supply and/or a current limiting coefficient of the power storage device when determining to adjust the charging power or the discharging power.

18. The power supply control apparatus according to any one of claims 10 to 17, wherein the processing module is further configured to:

determine an initial power prediction model, wherein the initial power prediction model comprises a deep learning model;

obtain historical power load data of the device, wherein the historical power load data comprises power load of the device recorded before the first moment; and

train the initial power prediction model by using the historical power load data.

19. A computing device, wherein the computing device comprises a memory and a processor, and the processor executes computer instructions stored in the memory, so that the computing device performs operation steps of the method according to any one of claims 1 to 9.

20. A system for supplying power to a device, comprising a power module management apparatus, a power storage device, and a power sourcing equipment control apparatus, wherein

the power sourcing equipment control apparatus is configured to predict power load of an electric device in an electricity price interval, wherein the electricity price interval is a continuous time period in which electricity prices are the same; and select a power supply policy for the electric device based on the power load of the electric device in the electricity price interval, a quantity of stored electric charges of the power storage device at a first moment, and an electricity price of an electricity price interval within which the first moment falls;

the power storage device is configured to store a quantity of electric charges and supply power to the electric device; and

the power module management apparatus is configured to supply power to the electric device and charge the power storage device.

**System for supplying power to device 100**

Power module management apparatus pool 130

Power module management apparatus 1310

| Power module 13111 | Power module 13112 | Power module 13113 |
|---|---|---|

Power management software 13120

Power storage device control apparatus 110

| Power prediction module 1110 | Power supply policy decision module 1120 | Communication module 1130 |
|---|---|---|

Data storage module 1140

Power module management apparatus 1320

| Power module 13212 | Power module 13212 | Power module 13213 |
|---|---|---|

Power management software 13220

Power module management apparatus 1310

| Power module 13311 | Power module 13312 | Power module 13313 |
|---|---|---|

Power management software 13320

Electric device group 140

Computing device 1410

Network device 1420

Storage device 1430

Power storage device resource pool 120

Power storage device 1210

Power storage device 1220

Power storage device 1230

FIG. 1

A power storage device controller obtains power load of a device in an electricity price interval through prediction by using a power prediction model ⟋ S201

The power storage device controller obtains a quantity of redundant electric charges of a power storage device through calculation based on the power load of the device in the electricity price interval, a quantity of stored electric charges of the power storage device at a first moment, and an electricity price of an electricity price interval within which the first moment falls ⟋ S202

The power storage device controller selects a power supply policy for the device based on the quantity of redundant electric charges of the power storage device obtained through calculation ⟋ S203

The power storage device controller supplies power to the device based on the obtained power supply policy ⟋ S204

FIG. 2

Input layer          Hidden layer          Output layer

FIG. 3

EP 4 167 417 A1

Upper limit of
power load of a
power supply

Predicted
load curve

Fourth
electricity price
interval

Third
electricity
price interval

Seventh
electricity
price
interval

Eighth
electricity
price interval

Second
electricity
price
interval

Sixth
electricity
price interval

First
electricity
price interval

Fifth
electricity
price
interval

| Quantity of rechargeable electric charges in each electricity price interval | A1 | A2 | A3 | A4 | A5 | A6 | A7 | A8 |
|---|---|---|---|---|---|---|---|---|
| Quantity of consumed electric charges in each electricity price interval | B1 | B2 | B3 | B4 | B5 | B6 | B7 | B8 |

FIG. 4

500

| Power prediction module | Processing module | Communication module |
|---|---|---|

510 520 530

FIG. 5

600

Processor

610

640

Memory

Program code

630

Communication interface

620

FIG. 6

## INTERNATIONAL SEARCH REPORT

International application No.

**PCT/CN2021/088668**

### A. CLASSIFICATION OF SUBJECT MATTER

H02J 3/00(2006.01)i

According to International Patent Classification (IPC) or to both national classification and IPC

### B. FIELDS SEARCHED

Minimum documentation searched (classification system followed by classification symbols)

H02J;G06Q

Documentation searched other than minimum documentation to the extent that such documents are included in the fields searched

Electronic data base consulted during the international search (name of data base and, where practicable, search terms used)

CNPAT, CNKI, EPODOC, WPI: 数据中心, 供电, 储能, 储电, 电池, 电价, 成本, 电费, 预测, 功率, data, center, supply, power, storage, battery, accumulator, price, cost, forecast

### C. DOCUMENTS CONSIDERED TO BE RELEVANT

| Category* | Citation of document, with indication, where appropriate, of the relevant passages | Relevant to claim No. |
|---|---|---|
| X | CN 108898282 A (NORTH CHINA ELECTRIC POWER UNIVERSITY) 27 November 2018 (2018-11-27) claim 1, description paragraphs [0038]-[0177], figures 1-12 | 1-20 |
| A | CN 111311031 A (TRINASOLAR CO., LTD.) 19 June 2020 (2020-06-19) entire document | 1-20 |
| A | CN 104716693 A (HUAWEI TECHNOLOGIES CO., LTD.) 17 June 2015 (2015-06-17) entire document | 1-20 |
| A | CN 107994595 A (CHINA ELECTRIC POWER RESEARCH INSTITUTE CO., LTD. et al.) 04 May 2018 (2018-05-04) entire document | 1-20 |
| A | CN 109752953 A (STATE GRID TIANJIN ELECTRIC POWER COMPANY ELECTRIC POWER RESEARCH INSTITUTE et al.) 14 May 2019 (2019-05-14) entire document | 1-20 |
| A | US 2015170080 A1 (IBM) 18 June 2015 (2015-06-18) entire document | 1-20 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 July 2021** | **21 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/088668**

| Patent document cited in search report | | | Publication date (day/month/year) | Patent family member(s) | | | Publication date (day/month/year) |
|---|---|---|---|---|---|---|---|
| CN | 108898282 | A | 27 November 2018 | None | | | |
| CN | 111311031 | A | 19 June 2020 | None | | | |
| CN | 104716693 | A | 17 June 2015 | CN | 104716693 | B | 06 June 2017 |
| CN | 107994595 | A | 04 May 2018 | None | | | |
| CN | 109752953 | A | 14 May 2019 | None | | | |
| US | 2015170080 | A1 | 18 June 2015 | US | 10037501 | B2 | 31 July 2018 |

Form PCT/ISA/210 (patent family annex) (January 2015)